# FASCICULE DE BREVET EUROPEEN

(11) **EP 0 893 620 B1**
(45) Date de publication et mention de la délivrance du brevet: **23.10.2002**
(21) Numéro de dépôt: 98401835.8
(22) Date de dépôt: 20.07.1998
(51) Int. Cl.: F16F 13/26, H01F 7/16

(54) **Actionneur électromagnétique, et support antivibratoire hydraulique comportant un tel actionneur**
Elektromagnetischer Betätiger und hydraulisches Antischwingungslager mit einem solchen Betätiger
Electromagnetic actuator and hydraulic antivibration support with such an actuator

(30) Priorité: 23.07.1997 FR 9709365
(43) Date de publication de la demande: 27.01.1999
(73) Titulaire: HUTCHINSON, 75008 Paris (FR)
(72) Inventeur: Gennesseaux, André, 28200 Conie-Molitard (FR)
(74) Mandataire: Burbaud, Eric

(56) Documents cités:
- EP-A- 0 544 576
- PATENT ABSTRACTS OF JAPAN vol. 008, no. 281 (E-286), 21 décembre 1984 & JP 59 149010 A (MATSUSHITA DENKI SANGYO KK), 25 août 1984

## Description

La présente invention est relative aux actionneurs électromagnétiques, et aux supports antivibratoires hydrauliques comportant de tels actionneurs.

Plus particulièrement, l'invention concerne un actionneur électromagnétique, comportant :
- au moins un premier électro-aimant qui comprend une première bobine électrique associée à une première carcasse métallique,
- un élément magnétique mobile qui est déplaçable sous l'action du premier électro-aimant,
- au moins une première électrode qui est portée par une première plaque de circuit imprimé solidaire du premier électro-aimant, cette première électrode étant disposée en regard de l'élément magnétique mobile pour constituer avec celui-ci un capteur capacitif détectant les déplacements dudit élément magnétique mobile,
- et un circuit électronique de commande relié électriquement d'une part à la première électrode et à l'élément magnétique mobile pour mesurer les déplacements dudit élément magnétique mobile, et d'autre part à la première bobine pour commander le premier électro-aimant en imposant des mouvements vibratoires à l'élément magnétique mobile, en fonction des déplacements mesurés dudit élément magnétique mobile.

Le document EP-A-0 544 576 décrit un exemple d'un tel actionneur.

L'actionneur décrit dans ce document donne toute satisfaction, mais présente néanmoins un encombrement relativement important, notamment du fait de la présence de son circuit électronique de commande, distinct de la première plaque de circuit imprimé.

Cet encombrement peut être gênant en particulier lorsque l'actionneur doit être utilisé dans un environnement où peu de place est disponible, par exemple dans un support antivibratoire hydraulique tel que celui décrit dans le document EP-A-0 561 703.

La présente invention a notamment pour but de pallier cet inconvénient.

A cet effet, selon l'invention, un actionneur électromagnétique du genre en question est essentiellement caractérisé en ce que le circuit électronique de commande est porté au moins en partie par ladite première plaque de circuit imprimé.

Grâce à ces dispositions, on tire parti de la présence de la première plaque de circuit imprimé pour loger sur cette plaque au moins une partie du circuit électronique de commande, ce qui diminue l'encombrement dudit circuit et évite en outre des fils de liaison entre ce circuit et ladite première plaque de circuit imprimé.

Par ailleurs, l'expérience a montré que, malgré les vibrations dues au mouvement alternatif de l'élément magnétique mobile, le circuit électronique de commande présente une bonne fiabilité et une longévité normale, de sorte que l'actionneur électromagnétique selon l'invention fonctionne au moins aussi bien qu'un actionneur de l'art antérieur.

Dans des modes de réalisation préférés de l'actionneur selon l'invention, on peut éventuellement avoir recours en outre à l'une et/ou à l'autre des dispositions suivantes :
- l'actionneur électromagnétique comporte en outre un deuxième électro-aimant qui comprend une deuxième bobine électrique reliée électriquement au circuit électronique de commande et associée à une deuxième carcasse métallique, les premier et deuxième électro-aimants présentant un axe central commun et étant séparés par un espace partiellement occupé par un plateau ferromagnétique qui est perpendiculaire audit axe central et qui constitue ledit élément magnétique mobile, ce plateau ferromagnétique étant disposé entre d'une part la première électrode, et d'autre part une deuxième électrode qui est reliée électriquement au circuit électronique de commande et qui est portée par une deuxième plaque de circuit imprimé, laquelle est reliée électriquement à la première plaque de circuit imprimé et est solidaire du deuxième électro-aimant, cette deuxième électrode constituant ledit capteur capacitif avec la première électrode et le plateau ferromagnétique, et les première et deuxième plaques de circuit imprimé formant un ensemble de support qui porte le circuit électronique de commande (autrement dit, le circuit électronique de commande est soit porté par la première plaque, soit réparti sur les deux plaques) ;
- les première et deuxième carcasses comprennent respectivement des premier et deuxième noyaux métalliques qui sont entourés respectivement par les première et deuxième bobines, le plateau ferromagnétique et les première et deuxième électrodes étant disposés axialement entre lesdits premier et deuxième noyaux métalliques, les première et deuxième plaques de circuit imprimé présentant respectivement des faces dites intérieures qui sont orientées l'une vers l'autre et qui portent respectivement les première et deuxième électrodes, le circuit électronique de commande étant porté par au moins l'une desdites faces intérieures, ce circuit étant disposé radialement à l'extérieur du plateau ferromagnétique et des première et deuxième électrodes ;
- la première plaque de circuit imprimé est collée d'une part, sur le premier noyau métallique, et d'autre part, sur un premier flasque qui supporte la première bobine, tandis que la deuxième plaque de circuit imprimé est collée d'une part, sur le deuxième noyau métallique, et d'autre part, sur un deuxième flasque qui supporte la deuxième bobine ;
- les premier et deuxième flasques s'étendent radialement vers l'extérieur respectivement jusqu'au delà desdites première et deuxième bobines ;
- au moins la première plaque de circuit imprimé présente une zone qui n'est pas disposée en regard de la deuxième plaque de circuit imprimé, cette zone portant au moins un composant électronique qui s'étend depuis ladite première plaque de circuit imprimé jusqu'au delà de ladite deuxième plaque de circuit imprimé ;
- le circuit électronique de commande est relié au plateau ferromagnétique par un fil électrique souple non blindé qui présente une longueur inférieure à 3 cm : on réalise ainsi une économie et une simplification par rapport aux actionneurs de l'art antérieur, où ce fil souple avait une longueur nettement plus importante du fait de l'éloignement du circuit électronique de commande par rapport à l'élément magnétique mobile, de sorte qu'on devait avoir recours à un fil coaxial blindé.

Par ailleurs, l'invention a également pour objet un support antivibratoire hydraulique destiné à être interposé entre deux éléments rigides pour amortir et filtrer des vibrations entre ces deux éléments, ce support comprenant :
- des première et deuxième armatures rigides solidarisables respectivement avec les premier et deuxième éléments rigides,
- une paroi épaisse en élastomère qui relie entre elles les première et deuxième armatures en définissant une chambre de travail remplie de liquide,
- une membrane flexible en élastomère qui est portée par la première armature et qui définit une chambre de compensation également remplie de liquide et communiquant avec ladite chambre de travail par l'intermédiaire d'un passage étranglé,
- un piston qui présente au moins une face en contact avec la chambre de travail et qui est monté sur la première armature de façon à pouvoir se déplacer axialement,
- et un actionneur électromagnétique tel que défini ci-dessus, dont l'élément magnétique mobile est relié au piston pour imposer à ce piston des contre-vibrations propres à atténuer les vibrations entre les premier et deuxième éléments rigides.

Dans des modes de réalisation préférés du support antivibratoire selon l'invention, on peut éventuellement avoir recours en outre à l'une et/ou à l'autre des dispositions suivantes :
- la première armature présente d'une part, un côté extérieur comportant des première et deuxième zones disposées côte à côte et délimitant partiellement la chambre de travail et la chambre de compensation, et d'autre part, un côté intérieur formant un boîtier qui contient l'actionneur électromagnétique ;
- la première armature est métallique et présente au moins une zone de dissipation thermique en contact avec au moins la première plaque de circuit imprimé pour refroidir au moins un composant électronique porté par cette plaque de circuit imprimé.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en coupe verticale d'un support antivibratoire hydraulique selon une forme de réalisation de l'invention, équipé d'un actionneur électromagnétique,
- la figure 2 est une vue de détail de la figure 1, à plus grande échelle,
- et la figure 3 est une vue de dessous du support antivibratoire de la figure 1.

Sur les différentes figures, les mêmes références désignent des éléments identiques ou similaires.

Dans la description qui suit, les termes tels que "haut", "bas", "vertical", "horizontal", "supérieur", "inférieur" sont mentionnés uniquement pour rendre l'explication plus claire, en référence à la position la plus habituelle du support antivibratoire hydraulique 1, mais ces termes ne sont en aucun cas limitatifs.

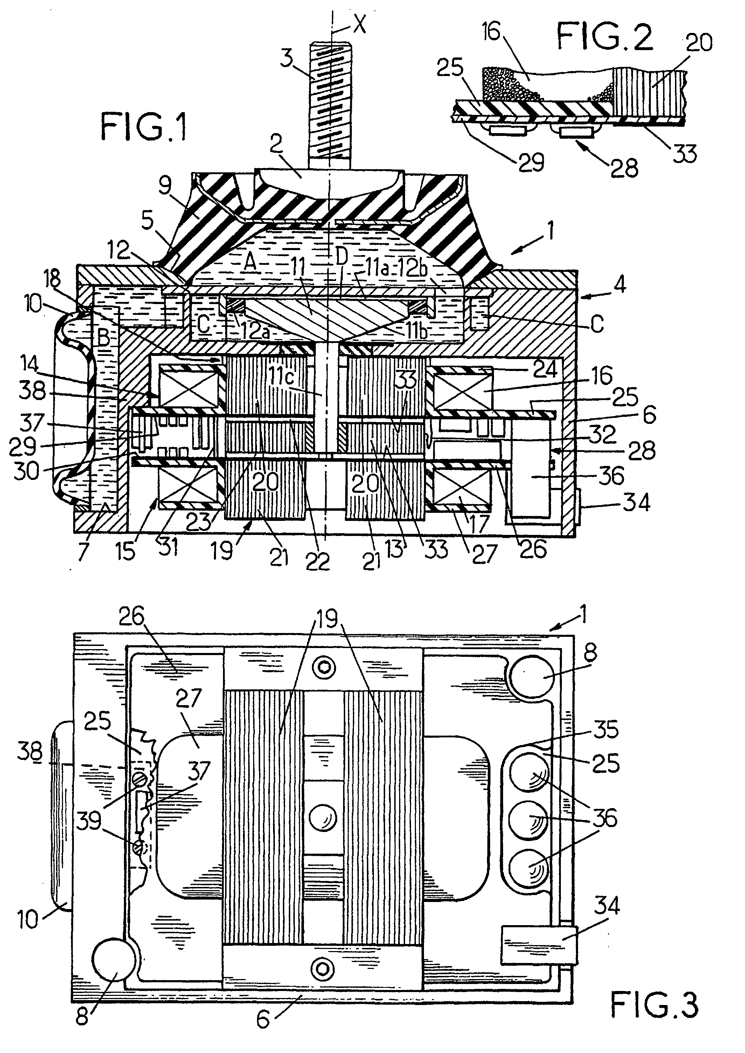

Ce support antivibratoire comprend :
- une tête métallique rigide 2 prolongée vers le haut par un goujon 3 d'axe X qui est destiné à être fixé par exemple à une partie du groupe motopropulseur d'un véhicule automobile,
- une embase métallique rigide 4 qui est généralement réalisée en plusieurs pièces et qui comprend une portée annulaire 5 centrée sur l'axe X, l'embase 4 formant en outre un boîtier parallélépipédique 6 ouvert vers le bas dont l'un des côtés présente une cuvette 7 ouverte latéralement vers l'extérieur, et l'embase 4 étant destinée à être fixée par exemple au châssis du véhicule, notamment au moyen de trous de fixation 8 (figure 3),
- une paroi tronconique épaisse 9 en élastomère, qui est centrée sur l'axe X et qui s'étend en s'évasant vers le bas, depuis un sommet solidaire de la tête 2 jusqu'à une base annulaire solidarisée de façon étanche avec la portée annulaire 5, la paroi 9 présentant une résistance à la compression suffisante pour jouer un rôle de support vis-à-vis du bloc moto-propulseur fixé à la tête 2, et ladite paroi 9 délimitant avec l'embase 4 une chambre de travail A étanche et remplie de liquide,
- une membrane souple en élastomère 10 qui est reliée de façon étanche à l'embase 4 en recouvrant la cuvette 7 de façon à définir avec cette cuvette une chambre de compensation B étanche et remplie de liquide,
- un canal étranglé C ménagé dans l'embase 4, ce canal étant également rempli de liquide et faisant communiquer la chambre de travail A avec la chambre de compensation B,
- un piston 11 dont la face supérieure lla est en contact avec une chambre à air D délimitée par une plaque 12 qui est solidaire de l'embase 4 et qui est reliée au piston 11 par un joint annulaire 12a en élastomère, cette plaque 12 étant par ailleurs percée de trous 12b qui font communiquer la face inférieure 11b du piston avec la chambre de travail A, ce piston se prolongeant vers le bas par une tige 11c coulissante qui s'étend longitudinalement selon l'axe X jusque dans le boîtier 6 de l'embase 4, la tige 11c traversant avec étanchéité la paroi inférieure de la chambre de travail A,
- un plateau ferromagnétique 13, de préférence feuilleté, qui s'étend radialement à partir de la tige 11c à l'intérieur du boîtier 6,
- deux électro-aimants 14, 15 (remplacés le cas échéant par un seul électro-aimant associé à un ressort de rappel de la tige 11c), qui sont fixés dans le boîtier 6 et qui comprennent chacun une bobine électrique d'axe X, respectivement 16, 17, montée dans une carcasse ferromagnétique feuilletée, respectivement 18, 19, chaque carcasse présentant un noyau central, respectivement 20, 21 qui est entouré par la bobine correspondante 16, 17 et qui est séparé du plateau ferromagnétique 13 par un entrefer 22, 23 de faible épaisseur, les carcasses 18, 19 présentant de préférence en outre des parties externes communes qui sont disposées à l'extérieur des bobines 16, 17 de façon à créer un circuit magnétique se refermant à travers le plateau 13 et les entrefers 22, 23,
- des flasques 24, 25, 26, 27, notamment en matière plastique, qui sont disposés respectivement au-dessus et au-dessous de chaque bobine 16, 17 pour assurer sa tenue, les flasques 25, 26 s'étendant avantageusement vers l'extérieur jusqu'au-delà des bobines 16, 17 en occupant sensiblement tout l'espace transversal disponible dans le boîtier 6,
- et un circuit électronique de commande 28 qui est implanté sur les deux faces en regard de deux plaques de circuit imprimé 29, 30 collées respectivement sur les faces axiales en regard des noyaux 20, 21 et sur les faces en regard des flasques 25, 26.

Les plaques de circuit imprimé 29, 30 peuvent être par exemple de type "FR4" de 200 à 500 µm d'épaisseur, ou encore des plaques de polyimide de 100 µm d'épaisseur.

Dans le cas considéré ici, le circuit électronique de commande 28 est réparti sur les deux plaques de circuit imprimé 29, 30, qui sont reliées entre elles par un fil 31 ou autre liaison électrique, mais bien entendu, le circuit 28 pourrait éventuellement être disposé sur une seule de ces plaques dans le cas où celle-ci présenterait une surface suffisante.

Dans tous les cas de figure, le circuit électronique 28 est relié :
- aux deux bobines 16, 17, de façon à commander les deux électro-aimants 14, 15 en imposant ainsi des mouvements vibratoires au piston 11,
- au plateau ferromagnétique 13, par l'intermédiaire d'un fil souple 32 qui est généralement non blindé et qui présente une longueur comprise par exemple entre 1 et 3 cm,
- à deux électrodes 33, dont une seule est visible sur la figure 2, ces deux électrodes 33 consistant par exemple en des couches de métal déposées sur les surfaces respectives des plaques de circuit imprimé 29, 30 qui font face au plateau ferromagnétique 13, les électrodes 33 formant avec ledit plateau ferromagnétique un capteur de déplacement capacitif qui permet au circuit électronique de commande 28 de déterminer à chaque instant la position exacte du plateau 13 et donc du piston 11,
- et à au moins un connecteur externe 34 qui alimente électriquement le circuit électronique de commande 28 et qui peut le cas échéant servir également à échanger des informations entre le circuit électronique de commande 28 et un calculateur de bord du véhicule.

Par ailleurs, au moins l'un des flasques 25, 26 et la plaque 29, 30 correspondante de circuit imprimé, en l'occurrence le flasque 26 et la plaque 30, peuvent présenter une ou plusieurs échancrures 35 pour laisser le passage à des composants électroniques encombrants 36 qui sont fixés sur l'autre des plaques de circuit imprimé, en l'occurrence la plaque 29.

Enfin, pour faciliter le refroidissement d'un ou plusieurs composants électroniques 37 du circuit 28, par exemple des transistors de puissance, il est possible de prévoir que le boîtier 6 présente des bossages 38 qui sont situés au voisinage de ces composants et sur lesquels est fixée la plaque de circuit imprimé 29 correspondante et éventuellement le flasque 25 correspondant, cette fixation pouvant être effectuée notamment au moyen de vis 39 (voir figure 3). On dissipe ainsi grâce au boîtier métallique 6 la chaleur produite par lesdits composants.

Le support antivibratoire hydraulique qui vient d'être décrit fonctionne classiquement comme suit :
- lorsque des oscillations de relativement basse fréquence et de grande amplitude sont appliquées entre la tête 2 et l'embase 4, ces oscillations se traduisent par un refoulement alternatif de liquide entre les chambres A et B, par l'intermédiaire du passage étranglé C, ce qui a pour effet d'amortir lesdites oscillations,
- par ailleurs, afin d'atténuer les vibrations de relativement grande fréquence et de faible amplitude entre la tête 2 et l'embase 4, l'actionneur électromagnétique constitué par le plateau 13, les électro-aimants 14, 15 et le circuit électronique de commande 28, impose au piston 11 des contre-vibrations, en fonction notamment des déplacements du plateau 13, mesurés par le capteur capacitif susmentionné.

## Revendications

1. Actionneur électromagnétique, comportant :
- au moins un premier électro-aimant (14) qui comprend une première bobine électrique (16) associée à une première carcasse métallique (18),
- un élément magnétique mobile (13) qui est déplaçable sous l'action du premier électro-aimant (14),
- au moins une première électrode (33) qui est portée par une première plaque de circuit imprimé (29) solidaire du premier électro-aimant (14), cette première électrode étant disposée en regard de l'élément magnétique mobile (13) pour constituer avec celui-ci un capteur capacitif détectant les déplacements dudit élément magnétique mobile,
- et un circuit électronique de commande (28) relié électriquement d'une part à la première électrode (33) et à l'élément magnétique mobile (13) pour mesurer les déplacements dudit élément magnétique mobile, et d'autre part à la première bobine (16) pour commander le premier électro-aimant (14) en imposant des mouvements vibratoires à l'élément magnétique mobile (13), en fonction des déplacements mesurés dudit élément magnétique mobile,
**caractérisé en ce que** le circuit électronique de commande (28) est porté au moins en partie par ladite première plaque de circuit imprimé (29).

2. Actionneur électromagnétique selon la revendication 1, comportant en outre un deuxième électro-aimant (15) qui comprend une deuxième bobine électrique (17) reliée électriquement au circuit électronique de commande (28) et associée à une deuxième carcasse métallique (19), les premier et deuxième électro-aimants présentant un axe central commun (X) et étant séparés par un espace partiellement occupé par un plateau ferromagnétique (13) qui est perpendiculaire audit axe central et qui constitue ledit élément magnétique mobile, ce plateau ferromagnétique étant disposé entre d'une part la première électrode (33), et d'autre part une deuxième électrode (33) qui est reliée électriquement au circuit électronique de commande (28) et qui est portée par une deuxième plaque de circuit imprimé (30), laquelle est reliée électriquement à la première plaque de circuit imprimé (29) et est solidaire du deuxième électro-aimant (15), cette deuxième électrode constituant ledit capteur capacitif avec la première électrode (33) et le plateau ferromagnétique (13), et les première et deuxième plaques de circuit imprimé (29, 30) formant un ensemble de support qui porte le circuit électronique de commande

3. Actionneur électromagnétique selon la revendication 2, dans lequel les première et deuxième carcasses (18, 19) comprennent respectivement des premier et deuxième noyaux métalliques (20, 21) qui sont entourés respectivement par les première et deuxième bobines (16, 17), le plateau ferromagnétique (13) et les première et deuxième électrodes étant disposés axialement entre lesdits premier et deuxième noyaux métalliques, les première et deuxième plaques de circuit imprimé (29, 30) présentant respectivement des faces dites intérieures qui sont orientées l'une vers l'autre et qui portent les première et deuxième électrodes (33), le circuit électronique de commande (28) étant porté par au moins l'une desdites faces intérieures, ce circuit étant disposé radialement à l'extérieur du plateau ferromagnétique (13) et des première et deuxième électrodes (33).

4. Actionneur électromagnétique selon la revendication 3, dans lequel la première plaque de circuit imprimé (29) est collée d'une part, sur le premier noyau métallique (20), et d'autre part, sur un premier flasque (25) qui supporte la première bobine (16), tandis que la deuxième plaque de circuit imprimé (30) est collée d'une part, sur le deuxième noyau métallique (21), et d'autre part, sur un deuxième flasque (26) qui supporte la deuxième bobine (17).

5. Actionneur électromagnétique selon la revendication 4, dans lequel les premier et deuxième flasques (25, 26) s'étendent radialement vers l'extérieur respectivement jusqu'au delà desdites première et deuxième bobines (16, 17).

6. Actionneur électromagnétique selon l'une quelconque des revendications 2 à 5, dans lequel au moins la première plaque de circuit imprimé (29) présente une zone qui n'est pas disposée en regard de la deuxième plaque de circuit imprimé (30), cette zone portant au moins un composant électronique (36) qui s'étend depuis ladite première plaque de circuit imprimé jusqu'au delà de ladite deuxième plaque de circuit imprimé.

7. Actionneur électromagnétique selon l'une quelconque des revendications précédentes, dans lequel le circuit électronique de commande (28) est relié au plateau ferromagnétique par un fil électrique souple non blindé qui présente une longueur inférieure à 3 cm.

8. Support antivibratoire hydraulique destiné à être interposé entre deux éléments rigides pour amortir et filtrer des vibrations entre ces deux éléments, ce support comprenant :
- des première et deuxième armatures rigides (4, 2) solidarisables respectivement avec les premier et deuxième éléments rigides,
- une paroi épaisse (9) en élastomère qui relie entre elles les première et deuxième armatures (4,2) en définissant une chambre de travail (A) remplie de liquide,
- une membrane flexible (10) en élastomère qui est portée par la première armature (4) et qui définit une chambre de compensation (B) également remplie de liquide et communiquant avec ladite chambre de travail par l'intermédiaire d'un passage étranglé (C),
- un piston (11) qui présente au moins une face (llb) en contact avec la chambre de travail (A) et qui est monté sur la première armature (4) de façon à pouvoir se déplacer axialement,
- et un actionneur électromagnétique (13,14, 15,28) selon l'une quelconque des revendications précédentes, dont l'élément magnétique mobile (13) est relié au piston (11) pour imposer à ce piston des contre-vibrations propres à atténuer les vibrations entre les premier et deuxième éléments rigides.

9. Support antivibratoire selon la revendication 8, dans lequel la première armature (4) présente d'une part, un côté extérieur comportant des première et deuxième zones disposées côte à côte et délimitant partiellement la chambre de travail (A) et la chambre de compensation (B), et d'autre part, un côté intérieur formant un boîtier (6) qui contient l'actionneur électromagnétique (13,14,15,28).

10. Support antivibratoire selon la revendication 9, dans lequel la première armature (4) est métallique et présente au moins une zone de dissipation thermique (38) en contact avec au moins la première plaque de circuit imprimé (29) pour refroidir au moins un composant électronique (37) porté par cette plaque de circuit imprimé.

## Patentansprüche

1. Elektromagnetischer Betätiger mit:
- mindestens einem ersten Elektromagnet (14), der eine erste elektrische Spule (16) in Verbindung mit einem ersten Metallgehäuse (18) enthält,
- einem beweglichen magnetischen Element (13), das unter Einwirkung des ersten Elektromagneten (14) verschiebbar ist,
- mindestens einer ersten Elektrode (33), die auf einer ersten gedruckten Leiterplatte (29) sitzt, die mit dem ersten Elektromagneten (14) fest verbunden ist, wobei diese erste Elektrode dem beweglichen magnetischen Element (13) gegenüber angeordnet ist, um mit diesem einen kapazitiven Sensor zu bilden, der die Verschiebungen des genannten beweglichen magnetischen Elements erkennt, und
- einem elektronischen Steuerschaltkreis (28), der elektrisch einerseits mit der ersten Elektrode (33) und mit dem beweglichen magnetischen Element (13) verbunden ist, um die Verschiebungen des genannten beweglichen magnetischen Elements zu messen, und andererseits mit der ersten Spule (16) verbunden ist, um den ersten Elektromagnet (14) zu steuern, indem das magnetische Element (13) abhängig von den gemessenen Verschiebungen des genannten beweglichen magnetischen Elements in Schwingbewegungen versetzt wird,
**dadurch gekennzeichnet,**
**dass** der elektronische Steuerschaltkreis (28) wenigsten teilweise auf der ersten gedruckten Leiterplatte (29) sitzt.

2. Elektromagnetischer Betätiger nach Anspruch 1, der ferner einen zweiten Elektromagnet (15) aufweist, der eine zweite elektrische Spule (17) in Verbindung mit einem zweiten Metallgehäuse (19) enthält, die elektrisch mit dem elektronischen Steuerschaltkreis (28) verbunden ist, wobei der erste und der zweite Elektromagnet eine gemeinsame Mittelachse (X) besitzen und durch einen Zwischenraum voneinander getrennt sind, der teilweise von einer Eisenmagnet-Platte (13) eingenommen wird, die senkrecht zu dieser Mittelachse steht und das genannte bewegliche magnetische Element bildet, wobei diese Eisenmagnet-Platte zwischen der ersten Elektrode (33) einerseits und einer zweiten Elektrode (33) andererseits angeordnet ist, welche elektrisch mit dem elektronischen Steuerschaltkreis (28) verbunden ist und auf einer zweiten gedruckten Leiterplatte (30) sitzt, die ihrerseits elektrisch mit der ersten gedruckten Leiterplatte (29) verbunden ist und fest mit dem zweiten Elektromagnet (15) verbunden ist, wobei diese zweite Elektrode mit der ersten Elektrode (33) und der Eisenmagnet-Platte (13) den genannten kapazitiven Sensor bildet und die erste und die zweite gedruckte Leiterplatte (29, 30) eine Träger-Gesamtanordnung bilden, auf der der elektronische Steuerschaltkreis sitzt.

3. Elektromagnetischer Betätiger nach Anspruch 2, bei dem das erste und das zweite Metallgehäuse (18,19) einen ersten bzw. einen zweiten Metallkern (20, 21) enthalten, die von der ersten bzw. zweiten Spule (16, 17) umgeben sind, wobei die Eisenmagnet-Platte (13) und die erste und die zweite Elektrode axial zwischen diesem ersten und diesem zweiten Metallkern ungeordnet sind, wobei die erste und die zweite gedruckte Leiterplatte (29, 30) jeweils sogenannte Innenseiten aufweisen, die einander zugekehrt sind und an denen die erste und die zweite Elektrode (33) sitzen, wobei der elektronische Steuerschaltkreis (28) an wenigstens einer dieser Innenseiten sitzt, wobei dieser Schaltkreis radial außerhalb der Eisenmagnet-Platte (13) und der ersten und der zweiten Elektrode (33) angeordnet ist.

4. Elektromagnetischer Betätiger nach Anspruch 3, bei dem die erste gedruckte Leiterplatte (29) einerseits an dem ersten Metallkern (20) und andererseits an einem ersten Flansch (25) angeklebt ist, an dem die erste Spule (16) sitzt, während die zweite gedruckte Leiterplatte (30) einerseits an dem zweiten Metallkern (21) und andererseits an einem zweiten Flansch (26) angeklebt ist, an dem die zweite Spule (17) sitzt.

5. Elektromagnetischer Betätiger nach Anspruch 4, bei dem sich der erste und der zweite Flansch (25, 26) radial nach außen bzw. bis über die erste und die zweite Spule (16, 17) hinaus erstrecken.

6. Elektromagnetischer Betätiger nach einem der Ansprüche 2 bis 5, bei dem wenigstens die erste gedruckte Leiterplatte (29) einen Bereich aufweist, der nicht der zweiten gedruckten Leiterplatte (30) gegenüber angeordnet ist, wobei in diesem Bereich mindestens eine elektronische Komponente (36) sitzt, die sich von dieser ersten gedruckten Leiterplatte aus bis über diese zweite gedruckte Leiterplatte hinaus erstreckt.

7. Elektromagnetischer Betätiger nach einem der vorherigen Ansprüche, bei dem der elektronische Steuerschaltkreis (28) durch eine ungeschirmte Drahtlitze mit einer Länge von weniger als 3 cm mit der Eisenmagnet-Platte verbunden ist.

8. Schwingungsdämpfendes Lager, das dazu vorgesehen ist, zwischen zwei starren Elementen angeordnet zu werden, um die Schwingungen zwischen diesen beiden Elementen zu dämpfen und zu filtern, wobei dieses Lager aufweist:
- eine erste und eine zweite starre Halterung (4, 2), die mit dem ersten bzw. dem zweiten starren Element fest verbunden werden können,
- eine dicke Wand (9) aus Elastomer, die die erste und die zweite starre Halterung (4, 2) miteinander verbindet und dabei eine Arbeitskammer (A) umgrenzt, die mit Flüssigkeit gefüllt ist,
- eine biegsame Membran (10) aus Elastomer, die auf der ersten Halterung (4) sitzt und eine Ausgleichskammer (B) umgrenzt, die ebenfalls mit Flüssigkeit gefüllt ist und mit dieser Arbeitskammer über einen verengten Durchlass (C) kommuniziert,
- einen Kolben (11), von dem sich mindestens eine Seite (11b) in Kontakt mit der Arbeitskammer (A) befindet, und der an der ersten Halterung (4) dergestalt angebracht ist, dass er sich axial verschieben kann, und
- einen elektromagnetischen Betätiger (13, 14, 15, 28) nach einem der vorherigen Ansprüche, dessen bewegliches magnetisches Element (13) mit dem Kolben (11) verbunden ist, darnit dieser Kolben unter Gegenschwingungen gesetzt wird, die geeignet sind, die Schwingungen zwischen dem ersten und dem zweiten starren Element zu dämpfen.

9. Schwingungsdämpfendes Lager nach Anspruch 8, bei dem die erste Halterung (4) einerseits eine Außenseite hat, die einen ersten und einen zweiten Bereich aufweist, die nebeneinander liegen und die Arbeitskammer (A) und die Ausgleichskammer (B) teilweise umgrenzen, und andererseits eine Innenseite hat, die ein Gehäuse (6) bildet, das den elektromagnetischen Betätiger (13, 14, 15, 28) enthält.

10. Schwingungsdämpfendes Lager nach Anspruch 9, bei dem die erste Halterung (4) aus Metall besteht und mindestens einen Wärmeabstrahlungsbereich (38) aufweist, der sich in Kontakt mit wenigstens der ersten gedruckten Leiterplatte (29) befindet, um wenigstens eine elektronische Komponente (37) zu kühlen, die auf dieser gedruckten Leiterplatte sitzt.

## Claims

1. An electromagnetic actuator comprising:
• at least a first electromagnet (14) comprising a first electrical coil (16) associated with a first metal yoke (18);
• a moving magnetic element (13) movable under drive from the first electromagnet (14);
• at least a first electrode (33) carried by a first printed circuit board (29) secured to the first electromagnet (14), said first electrode being disposed facing the moving magnetic element (13) to co-operate therewith to constitute a capacitive sensor detecting the displacement of said moving magnetic element; and
• an electronic control circuit (28) electrically connected firstly to the first electrode (33) and to the moving magnetic element (13) to measure the displacement of said moving magnetic element, and secondly to the first coil (16) to control the first electromagnet (14) to impart vibratory motion to the moving magnetic element (13) as a function of the measured displacement of said moving magnetic element;
**characterized in that** the electronic control circuit (28) is carried at least in part by said first printed circuit board (29).

2. An electromagnetic actuator according to claim 1, further including a second electromagnet (15) comprising a second electrical coil (17) electrically connected to the electronic control circuit (28) and associated with a second metal yoke (19), the first and second electromagnets having a common central axis (X) and being separated by a space partially occupied by a ferromagnetic slab (13) extending perpendicularly to said central axis and constituting said moving magnetic element, said ferromagnetic slab being disposed between the first electrode (33) and a second electrode (33) which is electrically connected to the electronic control circuit (28) and which is carried by a second printed circuit board (30) that is electrically connected to the first printed circuit board (29) and that is secured to the second electromagnet (15), said second electrode cooperating with said first electrode (33) and the ferromagnetic slab (13) to constitute said capacitive sensor, and the first and second printed circuit boards (29, 30) forming a support assembly carrying the electronic control circuit.

3. An electromagnetic actuator according to claim 2, in which the first and second yokes (18, 19) respectively comprise first and second metal cores (20, 21) which are respectively surrounded by the first and second coils (16, 17), the ferromagnetic slab (13) and the first and second electrodes being axially disposed between said first and second metal cores, the first and second printed circuit boards (29, 30) having respective inside faces facing each other and carrying the first and second electrodes (33), the electronic control circuit (28) being carried by at least one of said inside faces, said circuit being disposed radially outside said ferromagnetic slab (13) and the first and second electrodes (33).

4. An electromagnetic actuator according to claim 3, in which the first printed circuit board (29) is stuck firstly to the first metal core (20) and secondly to a first cheek plate (25) which supports the first coil (16), while the second printed circuit board (30) is stuck firstly to the second metal core (21) and secondly to a second cheek plate (26) which supports the second coil (17).

5. An electromagnetic actuator according to claim 4, in which the first and second cheek plates (25, 26) extend radially outwards respectively beyond said first and second coils (16, 17).

6. An electromagnetic actuator according to any one of claims 2 to 5, in which at least the first printed circuit board (29) has a zone which is not disposed facing the second printed circuit board (30), said zone including at least one electronic component (36) which extends from said first printed circuit board to beyond said second printed circuit board.

7. An electromagnetic actuator according to any preceding claim, in which the electronic control circuit (28) is connected to the ferromagnetic slab by a non-shielded flexible electric wire having a length of less than 3 cm.

8. A hydraulic antivibration support for interposing between two rigid elements to damp and filter vibration between said two elements, the support comprising:
• first and second rigid strength members (4, 2) respectively secured to the first and second rigid elements;
• a thick elastomer wall (9) interconnecting the first and second strength members (4, 2), while defining a working chamber (A) that is filled with liquid;
• a flexible elastomer membrane (10) carried by the first strength member (4) and defining a compensation chamber (B) also filled with liquid and in communication with said working chamber via a narrow passage (C);
• a piston (11) having at least one face (11b) in contact with the working chamber (A) and mounted on the first strength member (4) so as to be capable of moving axially; and
• an electromagnetic actuator (13, 14, 15, 28) according to any preceding claim, in which the moving magnetic element (13) is connected to the piston (11) to impart compensatory vibration to the piston suitable for attenuating the vibration between the first and second rigid elements.

9. An antivibration support according to claim 8, in which the first strength member (4) has firstly an outside including first and second zones disposed side by side and defining part of the working chamber (A) and the compensation chamber (B), and secondly an inside forming a box (6) containing the electromagnetic actuator (13, 14, 15, 28).

10. An antivibration support according to claim 9, in which the first strength member (4) is made of metal and has at least one heat dissipation zone (38) in contact with at least the first printed circuit board (29) to cool at least one electronic component (37) carried by said printed circuit board.
